(19) Europäisches Patentamt
European Patent Office
Office européen des brevets

(11) Veröffentlichungsnummer: **0 510 439 A1**

# (12) EUROPÄISCHE PATENTANMELDUNG

(21) Anmeldenummer: **92106119.8**

(22) Anmeldetag: **09.04.92**

(51) Int. Cl.5: **C08L 81/02**, //(C08L81/02, 61:28)

(30) Priorität: **23.04.91 DE 4113159**

(43) Veröffentlichungstag der Anmeldung:
**28.10.92 Patentblatt 92/44**

(84) Benannte Vertragsstaaten:
**BE DE FR GB IT**

(71) Anmelder: **BAYER AG**

**W-5090 Leverkusen 1 Bayerwerk(DE)**

(72) Erfinder: **Köhler, Burkhard, Dr.**
**Mündelheimer Strasse 94**
**W-4150 Krefeld 11(DE)**
Erfinder: **Rüsseler, Wolfgang, Dr.**
**Buschstrasse 165**
**W-4150 Krefeld(DE)**
Erfinder: **Dhein, Rolf, Dr.**
**Deswatinesstrasse 30**
**W-4150 Krefeld(DE)**
Erfinder: **Fengler, Gerd, Dr.**
**Deutschordensweg 12**
**W-4150 Krefeld-Traar(DE)**
Erfinder: **Sarabi, Bahman, Dr.**
**Oelhausenweg 55A**
**W-4150 Krefeld(DE)**

## (54) Mischungen aus Polyarylensulfiden, Glasfasern und Melaminharzen.

(57) Die Erfindung betrifft Mischungen aus von 89,9 bis 20 Gew.-% Polyarylensulfiden, von 0,1 bis 5 Gew.-% Melaminharzen und von 10 bis 79,9 Gew.-% Glasfasern und gegebenenfalls zusätzlich bis zu 300 Gewichtsteilen Füll- und Verstärkungsstoffen und/oder Hilfsstoffen, bezogen auf 100 Gew.-Teile Polyarylensulfide, und daraus herstellbare Formkörper, die sich durch gute mechanische Eigenschaften und eine geringe Schwimmhautbildung auszeichnen.

EP 0 510 439 A1

Die Erfindung betrifft Mischungen aus Polyphenylensulfid (PPS), Glasfasern und Melaminharzen. Die Mischungen zeichnen sich durch gute mechanische Eigenschaften und eine geringe Schwimmhautbildung aus.

Polyarylensulfide (PAS) sind bekannt (z.B. US-A 3 354 129, EP-A 171 021). Sie sind inerte, hochtemperaturbeständige Thermoplaste, die einen hohen Füllgrad, z.B. mit Glasfasern und/oder anderen anorganischen Füllstoffen erlauben. Der Einsatz dieser Polymeren, insbesondere des Polyphenylensulfids (PPS) nimmt in Bereichen zu, die bisher Duroplasten vorbehalten waren.

PAS hat unbefriedigende mechanische Eigenschaften für einige Anwendungen im Spritzgußbereich. Insbesondere sind Randfaserdehnung und Schlagzähigkeit für die Praxis nicht ausreichend. Es hat sich daher als Vorteil erwiesen, PAS z.B. durch Abmischung mit anderen Thermoplasten in den genannten Eigenschaften zu verbessern.

Die Verbesserung der mechanischen Eigenschaften von PAS gelingt auch mit Mischungen aus Maleinsäureanhydridgepfropften, hydrierten Dienkautschuken und Epoxiden (JP-A 63-118369). Die großen Mengen an verwendeten Maleinsäureanhydrid-gepfropften Polyolefinen mit niedriger Glastemperatur verbessern die Zähigkeit, jedoch läßt sich die Biegefestigkeit nicht wesentlich steigern.

Ferner lassen sich die mechanischen Eigenschaften von PAS mit Polyisocyanaten verbessern (JP-A 01118-571). Jedoch ist der Einsatz von Isocyanaten aus Gründen der Arbeitssicherheit problematisch.

Ferner zeigen PPS-Compounds eine Schwimmhautbildung bei der Spritzgußverarbeitung, d.h. daß sie aus Spalten der Spritzgußform austreten und Grate bilden.

Es ist in 84 JP-061155 840330 beschrieben, daß Melaminharze und PPS bei Einbrenntemperaturen unterhalb der Schmelztemperatur des PPS Beschichtungen bilden, die unlöslich und unschmelzbar, also duroplastisch sind. Solche Mischungen sollten daher nicht schmelzeverarbeitbar sein.

Der Zusatz von Glasfasern als Verstärkungsstoff in Beschichtungen ist technisch nicht sinnvoll.

Es wurde nun gefunden, daß Abmischungen von Polyphenylensulfid (PPS) mit Melaminharzen und Glasfasern sich durch gute mechanische Eigenschaften und eine geringe Schwimmhautbildung auszeichnen. Die Mischung kann in der Schmelze vorgenommen werden.

Gegenstand der Erfindung sind daher Mischungen aus

A) von 89,9 bis 20 Gew.-%, vorzugsweise von 37 bis 79,5 Gew.-%, Polyarylensulfiden, vorzugsweise Polyphenylensulfid,

B) von 0,1 bis 5 Gew.-%, vorzugsweise von 0,5 bis 3 Gew.-%, Melaminharzen der Formeln (I) oder (II), vorzugsweise der Formel (I)

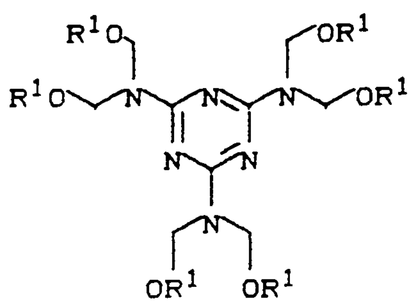

(I)

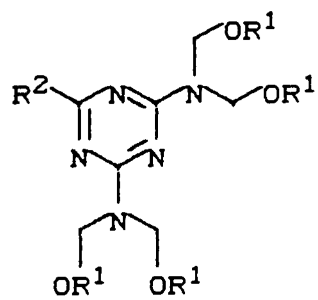

(II)

wobei $R^1$ für Wasserstoff oder einen aliphatischen $C_1$-$C_{22}$-Rest, vorzugsweise für einen Methyl-, Ethyl- oder Butylrest steht und $R^2$ für einen aliphatischen $C_1$-$C_{22}$- oder einen aromatischen $C_6$-$C_{14}$-Rest, vorzugsweise für Phenyl steht und bis zu zwei Alkoxymethylreste der erfindungsgemäßen Stoffe I oder II durch Wasserstoff ersetzt sein können

und

C) von 10 bis 79,9 Gew.-%, vorzugsweise von 20 bis 60 Gew.-% Glasfasern, die vorzugsweise mit Polyurethanfilmbildnern und Amino- oder Epoxysilanfilmbildnern geschlichtet sind

und gegebenenfalls zusätzlich von 0 bis zu 300 Gewichtsteile, bezogen auf 100 Gewichtsteile PAS, anderen minderalischen oder organischen Füll- und Verstärkungsstoffen und/oder anorganischen oder organischen Hilfsstoffen.

Die Abmischung der Komponenten erfolgt in Knetern oder Extrudern bei Temperaturen von 280 °C bis 350 °C in der Schmelze.

Beispiele für Melaminharze der Formel (I) sind Hexamethoxymethylmelamin, Hexaethoxymethylmelamin, Hexabutoxymethylmelamin, Tetramethoxymethylmelamin, Pentamethoxymethylmelamin oder Hexahydroxymethylmelamin.

Beispiele für Harze der Formel (II) sind Tetramethoxymethylbenzoguanamin, Tetramethoxyacetoguanamin und Tetraethoxymethylbenzoguanamin.

Die Substanzen der Formel (I) sind z. T kommerziell erhältlich (z.B. Cymel 303® der Fa. Cyanamid) oder aus Melamin, Formaldehyd und aliphatischen Alkoholen zugänglich. Die Substanzen der Formel (II) sind ebenfalls z. T. kommerziell erhältlich (Cymel 1123® der Fa. Cyanamid) oder aus Benzoguanamin (1,3-Diamino-5-phenyl-triazin), Formaldehyd und aliphatischen Alkoholen zugänglich.

Erfindungsgemäß werden handelsübliche, bevorzugt mit Polyurethanfilmbildnern und Amino- oder Epoxysilanhaftvermittlern geschlichtete Glasfasern eingesetzt. Sie haben einen Durchmesser von 1 bis 20 µm, vorzugsweise von 5 bis 13 µm. Es können Glasfasern gewählt werden, bei denen die Länge der Fasern in der fertigen Abmischung 0,05 bis 10 mm, vorzugsweise 0,1 bis 2 mm, beträgt. Es können auch Endlosglasfasern (rovings) eingesetzt werden in Verfahren zur Herstellung von endlosverstärktem Unidirektionalverbund.

Gegebenenfalls können auch - insbesondere teilweise - anstelle der Glasfasern handelsübliche Glaskugeln eingesetzt werden, z.B. Ballotini-Glaskugeln.

Als weitere, geeignete mineralische Füllstoffe oder Zusatzstoffe seien Glimmer, Talkum, Quarzmehl, Metalloxide und Sulfide, z.B. $TiO_2$, ZnO, ZnS, Graphit, Ruß, Fasern, z.B. aus Quarz oder Kohlenstoff, Carbonate wie z.B. $MgCO_3$, $CaCO_3$ oder Sulfate wie z.B. $CaSO_4$, $BaSO_4$ genannt.

Als weitere übliche Zusatzstoffe können Pigmente, Entformungsmittel, E-Wachse, Fließhilfsmittel, Nucleierungsmittel oder Stabilisatoren eingesetzt werden.

Es können von 0 bis 300 Gewichtsteile, bezogen auf 100 Gewichtsteile PAS, Füllstoffe und Zusatzstoffe eingesetzt werden.

Die erfindungsgemäßen Mischungen können auf übliche Art und Weise durch Extrusion hergestellt werden.

Gegenstand der Erfindung ist auch die Verwendung der erfindungsgemäßen Mischungen zur Herstellung geformter Körper.

Die erfindungsgemäßen Mischungen können auf übliche Weise zu Formteilen, Halbzeug, Leiterplatten, Fasern, Folien, Profilen usw. verarbeitet werden. Die erfindungsgemäßen Mischungen können generell in vorteilhafter Weise dort eingesetzt werden, wo thermoplastisch verarbeitbare Massen eingesetzt werden.

## Beispiele

Die Herstellung der erfindungsgemäßen Mischungen erfolgte auf einem Doppelwellenextruder ZSK 32 von Werner & Pfleiderer bei 320 °C.

Das verwendete PPS wies eine Schmelzviskosität von 45 Pas (306 °C, 1.000 l/s) auf und wurde nach EP-A 171 021 hergestellt.

Als Glasfaser wurde die mit Polyurethanfilmbildner und Aminosilanhaftvermittler geschlichtete Schnittglasfaser Bayer CS 7916® zu 40 Gew.-% eingesetzt.

Die Mischungen wurden granuliert un zu Prüfstäben der Maße 80x10x4 mm verspritzt. Diese wurden hinsichtlich Biegefestigkeit, Biegemodul und Schlagzähigkeit $a_n$ (reversed notched ISO 180) untersucht.

## Vergleichsbeispiel 1

Gemischt wurden 60 Gew.-% PPS mit 40 Gew.-% Glasfasern. Man erzielt eine Schlagzähigkeit von 30 kJ/m$^2$, eine Randfaserdehnung von 1,9 % und eine Biegefestigkeit von 250 MPa. Die Gratlänge beträgt 500 µm.

## Vergleichsbeispiel 2

Gemischt wurden 59 Gew.-% PPS mit 40 Gew.-% Glasfasern und 1 Gew.-% 4,4'-Bismaleinimidodiphenylmethan. Man erzielt eine Schlagzähigkeit von 45 kJ/m$^2$, eine Randfaserdehnung von 2,4 % und eine Biegefestigkeit von 305 MPa. Die Gratlänge beträgt 420 µm.

## Beispiel 1

Gemischt wurden 57 Gew.-% PPS mit 40 Gew.-% Glasfasern und 3 Gew.-% Hexahydroxymethylmelamin. Man erzielt eine Schlagzähigkeit von 45 kJ/m$^2$, eine Randfaserdehnung von 2,4 % und eine

Biegefestigkeit von 295 MPa. Die Gratlänge beträgt 300 µm.

Beispiel 2

Gemischt wurden 58,7 Gew.-% PPS mit 40 Gew.-% Glasfasern (FT-562 $^{R}$ der Fa. Asahi), 1 Gew.-% Hexamethoxymethylmelamin (Cymel 303 $^{R}$ der Fa. Cyanamide) und 0,3 Gew.-% PE-Wachs (PE 520 $^{R}$ der Fa. Hoechst AG). Man erzielt eine Schlagzähigkeit von 48 kJ/mm$^2$, eine Randfaserdehnung von 2,5 % und eine Biegefestigkeit von 293 MPa. Die Gratlänge beträgt 220 µm.

## Patentansprüche

**1.** Mischungen aus

A) von 89,9 bis 20 Gew.-% Polyarylensulfiden (PAS)

B) von 0,1 bis 5 Gew.-% Melaminharzen der Formel (I) oder (II)

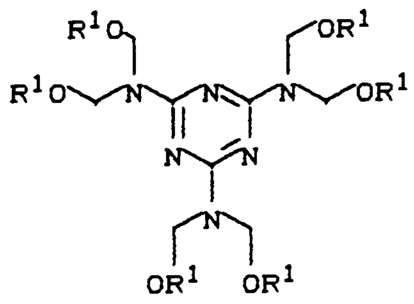

(I)

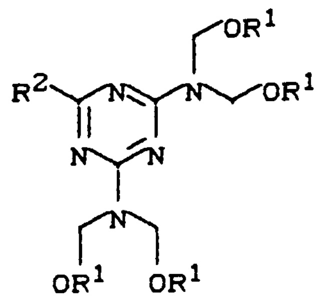

(II)

wobei $R^1$ für Wasserstoff oder einen aliphatischen $C_1$-$C_{22}$-Rest, $R^2$ für einen aliphatischen $C_1$-$C_{22}$- oder einen aromatischen $C_6$-$C_{14}$-Rest steht und bis zu zwei Alkoxymethylreste der erfindungsgemäßen Stoffe I oder II durch Wasserstoff ersetzt sein können

und

C) von 10 bis 79,9 Gew.-% Glasfasern

und gegebenenfalls zusätzlich von 0 bis zu 300 Gewichtsteilen, bezogen auf 100 Gewichtsteile PAS, anderen mineralischen oder organischen Füll- und Verstärkungsstoffen und/oder anorganischen oder organischen Hilfsstoffen.

**2.** Mischungen gemäß Anspruch 1, enthaltend

A) von 37 bis 79,5 Gew.-% Polyarylensulfide

B) von 0,5 bis 3 Gew.-% Melaminharze der Formel (I) oder (II), wobei $R^1$ für Wasserstoff oder einen aliphatischen $C_1$-$C_{22}$-Rest und $R^2$ für einen aliphatischen $C_1$-$C_{22}$- oder einen aromatischen $C_6$-$C_{14}$-Rest steht und bis zu zwei Alkoxymethylreste der Stoffe mit Formel (I) oder (II) durch Wasserstoff ersetzt sein können und

C) von 20 bis 60 Gew.-% Glasfasern und gegebenenfalls bis zu 300 Gewichtsteilen, bezogen auf 100 Gewichtsteile PAS, anderen mineralischen oder organischen Füll- und Verstärkungsstoffen und/oder anorganischen oder organischen Hilfsstoffen.

**3.** Mischungen nach Anspruch 1 bis 2, in denen als Polyarylensulfid Polyphenylensulfid eingesetzt wird.

**4.** Mischungen nach Anspruch 1 bis 2, in denen als Melaminharze solche der Formel (I) eingesetzt werden.

**5.** Mischungen nach Anspruch 1 bis 2, in denen der für Formel (I) und (II) angegebene Rest $R^1$ für einen Methyl-, Ethyl- oder Butylrest und der Rest $R^2$ für Phenyl steht.

6. Mischungen nach Anspruch 1 bis 2 mit Glasfasern, die mit Polyurethanfilmbildnern und Amino- oder Epoxysilanfilmbildnern geschlichtet sind.

7. Verwendung der Mischungen nach Anspruch 1 zur Herstellung geformter Körper.

8. Formkörper herstellbar aus Mischungen nach Anspruch 1.

Europäisches Patentamt

# EUROPÄISCHER RECHERCHENBERICHT

Nummer der Anmeldung

EP 92 10 6119

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-3 998 767 (R.J.WALTON)<br>* Spalte 2, Zeile 19 - Zeile 32 *<br>* Spalte 4, Zeile 1 - Zeile 12; Ansprüche 1-8; Beispiele 1,2; Tabellen 1,2 *<br>--- | 1-8 | C08L81/02<br>//(C08L81/02, 61:28) |
| A | EP-A-0 232 496 (ASAHI GLASS COMPANY)<br>* Seite 8, Zeile 21 - Seite 9, Zeile 13; Ansprüche 1,6; Beispiele 30-38; Tabelle 5 *<br>--- | 1-8 | |
| D,A | PATENT ABSTRACTS OF JAPAN<br>vol. 10, no. 67 (C-333)(2124) 15. März 1986 ( DAINIPPON INK ) 18. Oktober 1985<br>& JP-A-60 206 873<br>* Zusammenfassung *<br>----- | 1-5 | |

RECHERCHIERTE SACHGEBIETE (Int. Cl.5 )

C08L

Der vorliegende Recherchenbericht wurde für alle Patentansprüche erstellt

| Recherchenort | Abschlußdatum der Recherche | Prüfer |
|---|---|---|
| DEN HAAG | 08 JULI 1992 | KLIER E.K. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)